Europäisches Patentamt

European Patent Office

Office européen des brevets

(11) Numéro de publication : **0 509 851 A1**

## (12) DEMANDE DE BREVET EUROPEEN

(21) Numéro de dépôt : **92400272.8**

(22) Date de dépôt : **03.02.92**

(51) Int. Cl.⁵ : **B60G 17/056,** B61F 5/10, F16F 15/02

Revendications modifiées conformément à la règle 86 (2) CBE.

(30) Priorité : **16.04.91 FR 9104620**

(43) Date de publication de la demande : **21.10.92 Bulletin 92/43**

(84) Etats contractants désignés : **BE DE ES GB IT**

(71) Demandeur : **Forges de Belles Ondes 8, rue Blanche F-75009 Paris (FR)**

(72) Inventeur : **Faubeau, Edmond 1, rue Gaetan Pirou F-95580 Andilly (FR)**

(74) Mandataire : **Peuscet, Jacques et al Cabinet Peuscet 68, rue d'Hauteville F-75010 Paris (FR)**

(54) **Procédé pour limiter l'écartement de deux surfaces, l'écartement étant déterminé par un récipient gonflable, valve pour la mise en oeuvre de ce procédé, et application du procédé à une suspension pneumatique.**

(57)    Procédé pour limiter l'écartement entre deux surfaces, détermine par une enceinte gonflable alimentée en gaz sous pression. On utilise une valve (1) comportant une tige (5) munie d'un clapet (6) et deux conduits (10, 11) : un conduit (10) étant relie à l'alimentation en gaz sous pression de l'enceinte gonflable et l'autre conduit (11) à l'atmosphère. Par traction mécanique sur la tige (5) de la valve (1) le clapet (6) ouvre la communication entre les conduits (10 et 11) ce qui provoque un dégonflage de l'enceinte gonflable, donc une diminution de l'écartement des deux surfaces.

FIG.1

EP 0 509 851 A1

La présente invention concerne un procédé pour limiter l'écartement de deux surfaces, dont l'écartement est déterminé par un récipient gonflable.

Ce procédé s'applique plus particulièrement à un dispositif de suspension pour voiture de chemin de fer ou de métro. Il est connu que la suspension des voitures peut être effectuée à l'aide de coussins gonflés pneumatiquement disposés entre des organes porteurs, constitués par les bogies, et la caisse de la voiture, reliée à une conduite d'alimentation en gaz sous pression de l'air sous pression généralement. Cependant, ce coussin peut être accidentellement suralimenté, par exemple par suite de la défaillance du système de régulation de la suspension. L'écartement entre les bogies et la caisse de la voiture peut alors augmenter anormalement, c'est-à-dire que la caisse peut s'élever anormalement au-dessus des bogies.

A l'heure actuelle pour éviter une élévation anormale de la caisse, on utilise une tige ou une channe fixée sur le bogie ou la caisse qui vient en butée sur l'autre élément si la distance atteint une valeur déterminée $d_0$. On a donc une limitation par butée mécanique. Mais, la mise en butée n'empêche pas de continuer à gonfler le coussin, le gonflage pouvant aller jusqu'à l'éclatement du coussin. Dans ce cas, la caisse de la voiture retombe sur les bogies.

La présente invention a pour but de fournir un procédé de limitation de l'écartement qui permet d'éviter cet inconvénient en agissant sur la pression à l'intérieur de l'enceinte gonflable lorsque l'écartement dépasse une valeur donnée $d_0$.

Le procédé s'applique également à des camions ou à des autocars, suspendus pneumatiquement ; les coussins gonflés pneumatiquement sont alors prévus entre la caisse et un organe porteur, tel qu'un essieu.

La présente invention a donc pour objet un procédé pour limiter à une valeur $d_0$ l'écartement, entre deux surfaces, écartement déterminé par le taux de gonflement d'une enceinte gonflable alimentée en gaz sous pression, caractérisé par le fait que l'on branche, sur la conduite d'alimentation en gaz sous pression, une valve dont l'ouverture est commandée mécaniquement lorsque la distance entre les deux surfaces atteint $d_0$, l'ouverture de la valve mettant en communication avec l'atmosphère la conduite d'alimentation en gaz sous pression de l'enceinte gonflable et provoquant un dégonflage de cette dernière, la valve se refermant lorsque la distance entre les deux surfaces est inférieure à $d_0$.

Le procédé de la présente invention permet donc de maintenir pratiquement constante la distance entre les deux surfaces. Par exemple dans le cas des coussins de suspension de voitures de chemin de fer, on peut maintenir pratiquement constante la distance entre la caisse de la voiture et les bogies en cas de défaillance du système de régulation de la pression du gaz alimenté dans les coussins. De plus, on évite tout surgonflage du coussin et par conséquent tout risque d'éclatement dudit coussin.

Une vanne pour la mise en oeuvre du procédé ci-dessus comprend d'une part, un corps de valve comportant un alésage et deux conduits débouchant dans ledit alésage, le premier conduit pouvant être relié à l'alimentation sous pression de l'enceinte gonflable et le second conduit pouvant être relié à l'atmosphère et d'autre part, une tige portant à l'une de ses extrémités un clapet reposant sur un siège constitué par le bord de l'ouverture d'une cloison disposée entre l'alésage et l'un des conduits et à l'autre extrémité un élément de liaison avec le dispositif mécanique de commande, le clapet étant maintenu en appui sur son siège à l'aide d'un ressort disposé entre le clapet et un élément fixe associé au corps de valve, l'ouverture du clapet mettant en communication les deux conduits, la tige coulissant dans l'alésage par traction sur ladite tige à l'aide du dispositif mécanique.

Selon un mode de réalisation préféré, les deux conduits du corps de valve sont parallèles entre eux et perpendiculaires à l'alésage, le conduit relié à l'alimentation en gaz sous pression de l'enceinte gonflable s'ouvre latéralement dans l'alésage et le conduit relié à l'atmosphère communique avec l'alésage par l'ouverture ménagée dans la cloison formant siège pour le clapet, le clapet en position de fermeture empêchant toute communication entre l'alésage et ledit conduit relié à l'atmosphère.

Cette disposition a l'avantage qu'en position de fermeture la pression du gaz qui remplit le conduit relié à l'alimentation en gaz sous pression de l'enceinte gonflable et l'alésage aide à maintenir le clapet fermé.

Selon le mode de réalisation préféré, le second conduit peut être relié à l'atmosphère par l'intermédiaire d'une conduite constituée de deux parties à angle droit, une partie parallèle à l'alésage reliée au second conduit et une partie parallèle au second conduit s'ouvrant à l'extérieur du corps de valve. Une telle disposition permet d'adapter la position de l'ouverture vers l'atmosphère servant à l'échappement du gaz sous pression, à l'environnement de la valve. De plus, l'échappement de l'air est freiné, ce qui permet de régler de façon plus progressive l'écartement des deux surfaces et d'éviter des à-coups.

L'élément fixe associé au corps de valve sur lequel s'appuie le ressort est avantageusement constitué par un bouchon fixé au corps de valve fermant l'alésage, dans lequel est ménagé un canal pour le coulissement de la tige portant le clapet.

L'élément de liaison avec le dispositif mécanique de commande est avantageusement constitué par une plaquette munie d'une ouverture.

Cet élément est, de préférence, fixé de façon amovible sur la tige portant le clapet. Cette fixation se fait, avantageusement, par l'intermédiaire d'une chape emboîtée sur l'extrémité de la tige, la fixation pouvant se faire par un système d'ouvertures dans la tige et la chape et de goupilles.

Le dispositif mécanique actionnant la vanne peut avantageusement être constitué par une chaîne ou une tige articulée, dont une extrémité est reliée à l'une des surfaces, l'autre extrémité étant fixée à l'élément de liaison de la valve, la valve étant reliée de façon fixe à l'autre surface. Lorsque la distance entre les deux surfaces atteint la valeur $d_0$, la chaîne ou la tige atteint son extension maximale et tire sur la tige de la valve, provoquant l'ouverture du clapet.

La description donnée ci-dessous à titre illustratif et non limitatif permettra en combinaison avec le dessin annexé de mieux comprendre l'invention.

Sur ce dessin :

- la figure 1 représente une valve en section longitudinale selon l'invention,
- la figure 2 est un schéma d'un dispositif de suspension d'une voiture utilisant le procédé de la présente invention.

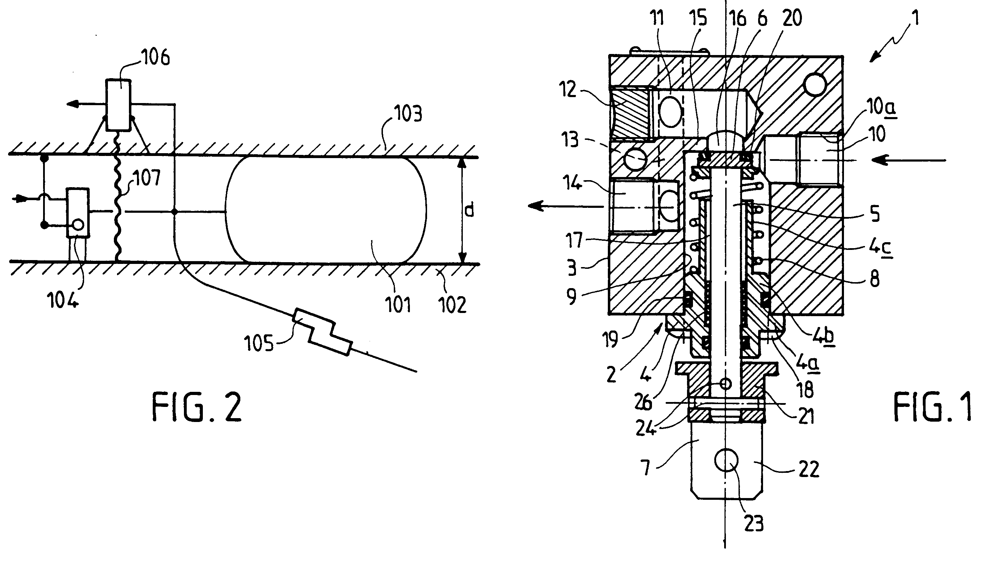

Sur la figure 1 la valve est désignée dans son ensemble par 1. Elle se compose d'un corps de valve 2 fixe constitué d'un corps principal 3 et d'un bouchon 4 comme élément fixe et d'une tige 5 portant un clapet 6 à une de ses extrémités et un élément de liaison 7 avec un dispositif mécanique d'actionnement de la valve. Un ressort 8 est disposé entre le clapet 6 et le bouchon 4.

Le corps de valve 2 a, dans son ensemble, la forme d'un parallélépipède rectangle. Dans le corps principal 3 du corps de valve 2 est ménagé un alésage 9 cylindrique axial. Deux conduits 10 et 11 perpendiculaires audit alésage 9 sont alésés dans le corps principal 3 ; ils sont parallèles entre eux et leur axe est situé à des niveaux différents par rapport à l'axe de l'alésage 9. Le premier conduit 10 peut être relié à l'alimentation sous pression de l'enceinte gonflable ; l'entrée du conduit 10 comporte un taraudage 10a. L'axe de ce conduit est situé approximativement au niveau du plan moyen du clapet 6. L'autre conduit 11 sert à l'échappement du gaz sous pression. Selon le mode de réalisation représenté, le conduit 11 ne s'ouvre pas directement sur l'extérieur du corps de valve 2, car il est fermé par un bouchon 12. Le conduit 11 communique avec un conduit 13 de plus faible diamètre disposé perpendiculairement au conduit 11 et parallèlement à l'axe du corps de valve 2. Le conduit 13 débouche dans un conduit 14 parallèle au conduit 11 et de même diamètre que ce dernier. Le conduit 14 s'ouvre à l'extérieur du corps de valve 2. Selon le mode de réalisation représenté, le bouchon 12 est placé dans le conduit 11, mais il est bien évident que l'on peut le placer dans le conduit 14 si on désire que l'échappement ait lieu au niveau du conduit 11. Le conduit 11 est séparé de l'alésage 9 par une cloison 15 dans laquelle est ménagée une ouverture 16 circulaire, dont le bord sert de siège au clapet 6.

L'alésage 9 du corps principal 3 est fermé par un élément formant bouchon 4 servant à la fixation de la tige 5 et du clapet. Dans le bouchon 4 est ménagé un canal 17 pour le passage de la tige 5. Il se compose d'une partie 4a extérieure à l'alésage 9 de dimension supérieure à l'alésage, qui est fixée à l'aide de vis 18 sur le corps principal 3 au voisinage du bord de l'alésage 9 et d'une partie 4b constituée par une partie annulaire ayant un diamètre extérieur égal, aux jeux près, au diamètre intérieur de l'alésage 9. La paroi extérieure de cette partie 4a est creusée d'une gorge contenant un joint torique assurant l'étanchéité. La partie 4b se prolonge sur sa paroi interne par une jupe 4c.

La tige 5 est disposée dans le canal 17 du bouchon 4 et dans l'alésage 9. Elle porte à son extrémité intérieure un clapet 6. Ce clapet est constitué par une pièce en forme de disque, dont le bord en appui sur le siège formé par le bord de l'ouverture 16 est muni d'un joint torique 20 assurant l'étanchéité. Un ressort hélicoïdal 8 s'appuie par une rondelle sur la face du clapet 6 opposée au siège et à son extrémité opposée sur le bord interne de la partie 4b du bouchon 4. Le ressort 6 entoure la jupe 4c de ce bouchon 4. L'élément de liaison 7 est fixé à l'extrémité extérieure de la tige 5. Il est constitué par une chape 21 fixée à la tige 5 par deux goupilles 24 perpendiculaires passant par des ouvertures correspondantes de la chape 21 et de la tige 5, et par une plaquette 22 comportant une ouverture 23 pour la fixation du dispositif mécanique d'actionnement de la valve 1.

Entre la tige et la paroi du canal 17 du bouchon est disposée une bague autolubrifiante 26.

La valve 1 fonctionne de la façon décrite ci-après.

Lorsque l'on exerce une traction mécanique suffisante sur l'élément de liaison 7, la tige 5 coulisse dans l'alésage 9 et le canal 17. Le clapet 6 s'ouvre et le gaz sous pression contenu dans le conduit 10 et l'alésage 9 peut s'échapper dans l'atmosphère par le conduit 11 et les conduits 13 et 14. Lorsque la traction exercée sur le dispositif de liaison 7 cesse, le ressort 8 fait coulisser en sens inverse la tige 5 et le clapet 6 vient reposer à nouveau sur son siège. La valve 1 est fermée.

La figure 2 représente schématiquement un dispositif de suspension d'une voiture de métro ou de chemin de fer utilisant le procédé de l'invention. Dans ce dispositif un coussin 101 est disposé entre le bogie 102, constituant l'organe porteur, et la caisse 103 de la voiture. Le coussin 101 est alimenté à partir d'une centrale pneumatique à 8 bars à l'aide d'une valve de nivellement 104 du type décrit dans FR-A-2 573 506 par exemple.

Sur la conduite d'alimentation du coussin 101 est branchée, d'une part, une valve 105 permettant de maintenir une pression égale dans les deux coussins 101 disposés sur un même bogie de façon à éviter que la caisse ne se mette en dévers et d'autre part, la valve 106 selon l'invention.

Cette valve 106 est fixée sur la caisse 103 et elle est actionnée par une chaîne 107 qui est attachée d'une part au bogie 102, ou organe porteur, et, d'autre part, au dispositif de liaison disposé à l'extrémité de la tige coulissante de la valve 106. La chaîne 107 a une longueur telle que lorsque la distance $\underline{d}$ entre la caisse 103 et le bogie 102, ou organe porteur, atteint une valeur déterminée $d_O$, elle se tend et actionne la valve 106.

L'air sous pression s'échappe et la pression diminue dans le coussin 101. Celui-ci s'aplatit et la distance $\underline{d}$ entre la caisse 103 et le bogie 102 diminue. La chaîne 107 n'est plus tendue et ne tire plus sur la tige de la valve 106.

Sous l'action du ressort de la valve 106, celle-ci se ferme.

La distance $\underline{d}$ entre la caisse 103 et le bogie 102 est ainsi limitée à $d_0$.

L'invention peut, bien entendu, également s'appliquer à des véhicules automobiles suspendus élastiquement, généralement des véhicules automobiles lourds tels que camions, autocars ou autobus. L'organe porteur est alors constitué, par exemple, par un essieu, au lieu d'un bogie ; le coussin pneumatique est disposé entre cet organe porteur et la caisse, ou structure équivalente.

## Revendications

1 - Valve pour limiter à une valeur $d_0$ l'écartement entre deux surfaces (102, 103), écartement déterminé par le taux de gonflement d'une enceinte gonflable (101) alimentée en gaz sous pression, ladite valve étant branchée sur la conduite d'alimentation en gaz sous pression, et l'ouverture de la valve étant commandée mécaniquement lorsque la distance entre les deux surfaces (102, 103) atteint la valeur $d_0$, l'ouverture de la valve (106) mettant en communication avec l'atmosphère la condutie d'alimentation en gaz sous pression de l'enceinte gonflable (101) et provoquant un dégonflage de cette dernière, et la valve (106) se refermant lorsque la distance entre les deux surfaces (102, 103) est inférieure à $d_0$, caractérisée par le fait qu'elle comprend d'une part, un corps de valve (2) comportant un alésage (9) et deux conduits (10, 11) débouchant dans ledit alésage (9), le premier conduit (10) pouvant être relié à l'alimentation sous pression de l'enceinte gonflage et s'ouvrant latéralement dans l'alésage (9), le second conduit (11) pouvant être relié à l'atmosphère, et d'autre part, une tige (5) portant à une de ses extrémités un clapet (6) reposant sur un siège constitué par le bord de l'ouverture (16) d'une cloison (15) disposée entre l'alésage (9) et le second conduit (11) et à l'autre extrémité un élément de liaison (7) avec un dispositif mécanique de commande, le clapet (6) étant maintenu en appui sur son siège à l'aide d'un ressort (8) disposé entre le clapet (6) et un élément fixe (4) associé au corps de valve, l'ouverture du clapet (6) mettant en communication les deux conduits (10, 11), la tige (5) coulissant dans l'alésage par traction sur ladite tige (5) à l'aide du dispositif mécanique, le conduit (11) relié à l'atmosphère communiquant avec l'alésage par l'ouverture (16) ménagée dans la cloison (15) formant siège pour le clapet (6), le clapet (6) en position de fermeture empêchant toute communication entre l'alésage (6) et ledit conduit (11) relié à l'atmosphère.

2 - Valve selon la revendication 1, caractérisée par le fait que les deux conduit (10, 11) du corps de valve (2) sont parallèles entre eux et perpendiculaires à l'alésage (9).

3 - Valve selon la revendication 1 ou 2, caractérisée par le fait que l'élément fixe (4) associé au corps de valve (2) sur lequel s'appuie le ressort (8) est constitué par un bouchon (4), fixé au corps de valve (1), fermant l'alésage, bouchon dans lequel est ménagé un canal (17) pour le coulissement de la tige (5) portant le clapet (6).

4 - Valve selon l'une des revendications 1 à 3, caractérisée par le fait que l'élément de liaison (7) avec le dispositif mécanique est constitué par une plaquette (22) munie d'une ouverture (23).

5 - Valve selon la revendication 4, caractérisée par le fait que la fixation de l'élément de liaison sur la tige se fait par l'intermédiaire d'une chape (21).

6 - Application d'une valve selon l'une des revendications précédentes à une suspension à coussin pneumatique, en particulier pour voiture de chemin de fer ou de métro, ou pour véhicule automobile lourd tel que camion, autocar, autobus, le coussin étant disposé entre la caisse et les organes porteurs de la voiture, suspension dans laquelle sur la conduite d'alimentation du coussin est branchée la valve dont l'ouverture est commandée mécaniquement lorsque la distance entre les deux surfaces (102, 103) ateint une valeur $d_0$, l'ouverture de la valve (106) mettant en communication avec l'atmosphère la conduite d'alimentation en gaz sous pression du coussin gonflable (101) et provoquant un dégonflage de ce dernier, et la valve (106) se refermant lorsque la distance entre les deux surfaces (102, 103) est inférieure à $d_0$.

FIG. 2

FIG.1

EP 0 509 851 A1

**Office européen des brevets**

# RAPPORT DE RECHERCHE EUROPEENNE

Numero de la demande

EP    92 40 0272

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | DE-B-1 070 043 (MASCHINENFABRIK AUGSBURG-NURNBERG) | 1,7 | B60G17/056 B61F5/10 |
| A | * colonne 3, ligne 30 - colonne 4, ligne 13; figure * | 2,4 | F16F15/02 |
| | --- | | |
| Y | FR-A-1 204 759 (KOLKA L.) * figure 2 * | 1,2,4,7 | |
| | --- | | |
| Y | US-A-3 790 147 (GENERAL MOTORS) * abrégé; figures * | 1,2,4,7 | |
| | --- | | |
| A | US-A-2 877 010 (GOUIRAND R.) * colonne 3, ligne 11 - ligne 40; figures 1,2 * | 1,7 | |
| | --- | | |
| A | US-A-2 361 575 (BUILDER-THOMSON ENGINEERING) * page 2, colonne de gauche, ligne 66 - colonne de droite, ligne 53; figures 1,3 * | 1,2,4,7 | |
| | --- | | |
| A | US-A-3 082 018 (BORG-WARNER CORP.) | | |
| | --- | | |
| A | US-A-2 916 298 (HAROLD BRENIMAN MCMULLIN) | | DOMAINES TECHNIQUES RECHERCHES (Int. Cl.5) |
| | --- | | |
| A | FR-A-2 277 278 (VEB CARL ZEISS JENA) | | B60G F16F B61F |
| | ----- | | |

Le présent rapport a été établi pour toutes les revendications

| Lieu de la recherche | Date d'achèvement de la recherche | Examinateur |
|---|---|---|
| LA HAYE | 08 JUILLET 1992 | TSITSILONIS  L. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)